# EUROPEAN PATENT APPLICATION

(11) **EP 4 685 707 A1**
(43) Date of publication of application: **28.01.2026**
(21) Application number: 25182238.3
(22) Date of filing: 12.06.2025
(51) Int. Cl.: G06N 3/09, G06N 20/00

(54) **CLASSIFICATION PROCESSING PROGRAM, CLASSIFICATION PROCESSING APPARATUS, AND CLASSIFICATION PROCESSING METHOD**

(30) Priority: 23.07.2024 JP 2024117751
(71) Applicant: FUJITSU LIMITED, Kawasaki-shi, Kanagawa 211-8588 (JP)
(72) Inventor: Hotta, Yuuji, Kawasaki-shi, Kanagawa, 211-8588 (JP)
(74) Representative: Hoffmann Eitle

(57) **Abstract**

A classification processing program characterized in that the program causes a computer to execute a process includes: inputting, into a machine learning model (201) that classifies input data pieces into one of a plurality of classes, a first input data piece (302) that does not have a ground truth label and a second input data piece (303) that has a known ground truth label; and determining whether the machine learning model is degraded (201) based on an output result for the second input data piece and the ground truth label (303), out of output results output from the machine learning model (201).

## Description

### [Technical Field]

The present disclosure relates to a classification processing program, a classification processing apparatus, and a classification processing method.

### [Background Art]

A Deep Learning (DL) model, which is one example of a machine learning model, may be used to classify data pieces. A DL model is a neural network generated through DL.

In a classification process, the class to which a data piece to be classified (hereinafter, referred to as "classification target data piece") belongs is estimated using a DL model. However, due to environmental changes during the operation of the DL model, data pieces having a tendency different from that of the training data pieces used to generate the DL model may be produced as classification targets.

For example, when the classification target data pieces are images, images that have different tendencies from those of the training data pieces may be produced due to changes in the imaging environment, such as degradation of lighting or dust on the camera lens. Such changes in tendencies of data pieces are referred to as "data drift".

Since data drift may occur, it is desirable to update the DL model by performing DL again, even during the operation of the DL model. However, since classification target data pieces produced during the operation do not have ground truth labels attached to them, it is difficult to perform effective machine learning on them as-is. To address this issue, the High-Resistance Learning (HDL) technique is used to adjust the DL model to data drift during the operation.

In relation to the HDL technique, a machine learning program capable of mitigating the degradation of the accuracy of machine learning models is known (for example, see Patent Document 1 and Non-Patent Document 1). A machine learning program that reduces the update time of machine learning models is also known (for example, see Patent Document 2).

### [Prior Art Reference]

### [Patent Document]

[Patent Document 1] International Publication Pamphlet No. WO 2023/067782
[Patent Document 2] Japanese Laid-open Patent Publication No. 2022-105916

### [Non-Patent Document]

[Non-Patent Document 1] H. Kingetsu et al., "MULTI-STEP TEST-TIME ADAPTATION WITH ENTROPY MINIMIZATION AND PSEUDO-LABELING", 2022 IEEE International Conference on Image Processing (ICIP), pages 4153-4157, 2022.

### [Summary of Invention]

### [Problem to be Solved by Invention]

During the operation of a DL model, data pieces to be classified may be imbalanced. Imbalanced data pieces refer to a data set in which, when the number of classification classes is known, the numbers of data pieces belonging to the respective classes are significantly different across the classification classes. When a set of classification target data pieces are imbalanced, the accuracy of classification results by the DL model updated using the HDL technique disclosed in Patent Document 1 tends to be decreased.

This issue is not limited to DL models updated using the HDL technique disclosed in Patent Document **1,** but also arises in the classification process using various machine learning models.

In one aspect, the present disclosure is directed to accurately classifying a plurality of classification target data pieces.

### [Means to Solve the Problem]

According to an aspect of embodiment(s), a classification processing program characterized in that the program causes a computer to execute a process includes: inputting, into a machine learning model that classifies input data pieces into one of a plurality of classes, a first input data piece that does not have a ground truth label and a second input data piece that has a known ground truth label; and determining whether the machine learning model is degraded based on an output result for the second input data piece out of output results output from the machine learning model, and the ground truth label.

### [Effect of Invention]

According to one embodiment, a plurality of classification target data pieces can be accurately classified.

### [Brief Description of Drawings]

FIG. 1 is a diagram for describing an example of imbalanced data pieces;
FIG. 2 is a diagram schematically illustrating the configuration of a classification processing apparatus as related art;
FIG. 3 is a diagram illustrating the information stored in a storage unit in the classification processing apparatus as related art;
FIG. 4 is a diagram schematically illustrating the configuration of a classification processing apparatus according to one embodiment;
FIG. 5 is a flowchart for describing an example of a training process in the classification processing apparatus according to one embodiment;
FIG. 6 is a flowchart for describing an example of a classification process in the classification processing apparatus according to one embodiment;
FIG. 7 is a diagram illustrating data pieces processed in the classification processing apparatus according to one embodiment;
FIG. 8 is a diagram exemplifying the configuration of a defective item detection system;
FIG 9 is a flowchart for describing an example of the process by the classification processing apparatus in a defective item detection system employing an image inspection Artificial Intelligence (AI); and
FIG. 10 is a block diagram illustrating an example of the hardware (HW) configuration of a computer embodying functions of the classification processing apparatus according to one embodiment and the classification processing apparatus of the related art.

### [Description of Embodiment(S)]

Hereinafter, an embodiment according to a classification processing program, a classification processing apparatus, and a classification processing method will be described with reference to the drawings. However, the embodiment described below is merely exemplary and is not intended to exclude various modifications or applications of the technology not explicitly stated in the embodiment. That is, the present embodiment may be embodied as various modifications (such as combining embodiments and variations) without departing from the gist thereof. In addition, each drawing does not imply that only the elements illustrated in the drawing are provided, but other functions or the like may also be included.

### (A) Related Art

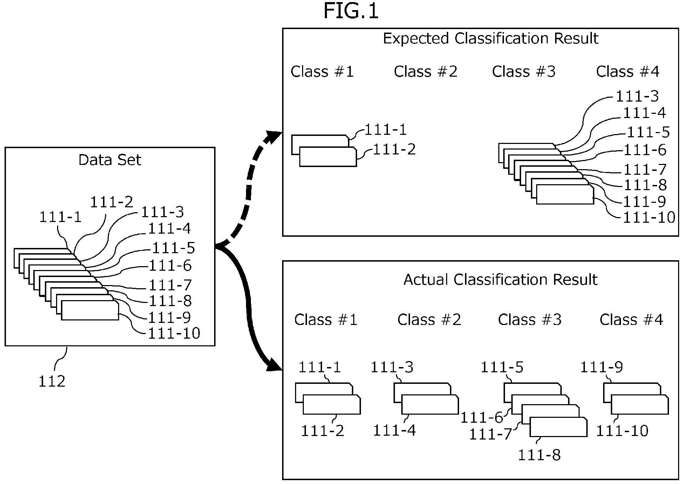

FIG. 1 illustrates an example of imbalanced data pieces. In this example, the DL model classifies classification target data pieces into one of class #1 to class #4. Thus, the number of classification classes is four.

A data set 112 is a collection of classification target data pieces produced during the operation of a DL model and includes a data piece 111-1 to a data piece 111-10. The data piece 111-1 and the data piece 111-2 belong to the class #1. The data piece 111-3 to the data piece 111-10 belong to the class #3. However, the data piece 111-1 to the data piece 111-10 have no ground truth labels attached to them. In this case, since the class ratio of the data set 112 is 2:0:8:0, the data set 112 is imbalanced.

In the expected classification results of the DL model, the data piece 111-1 and the data piece 111-2 should be classified into the class #1 and the data piece 111-3 to the data piece 111-10 should be classified into the class #3.

However, a common characteristic of a lot of machine learning algorithms is that even if a DL model is updated using classification target data pieces during the operation, the updated DL model tends to classify classification target data pieces so that the class ratio in the classification target data set approaches to the class ratio in the training data set. For this reason, when the class ratio in the classification target data set significantly differs from the class ratio in the training data set, even the classification process using the HDL technique disclosed in Patent Document 1 may classify some data pieces into classes different from their true classes.

In the actual classification results illustrated in FIG. 1, the data pieces 111-1 and 111-2 that belong to the class #1 are classified into the class #1. On the other hand, the data pieces 111-3 and 111-4 that belong to the class #3 are classified into the class #2, the data pieces 111-5 to 111-8 that belong to the class #3 are classified into the class #3, and the data pieces 111-9 and 111-10 that belong to the class #3 are classified into the class #4. Therefore, the data pieces 111-3, 111-4, 111-9, and 111-10 are misclassified into classes different from their true classes.

As described above, when the classification target data pieces is imbalanced, the classification accuracy of the HDL technique disclosed in Patent Document 1 tends to be decreased. In particular, when the number of data pieces belonging to either one class is zero, the classification accuracy drops significantly.

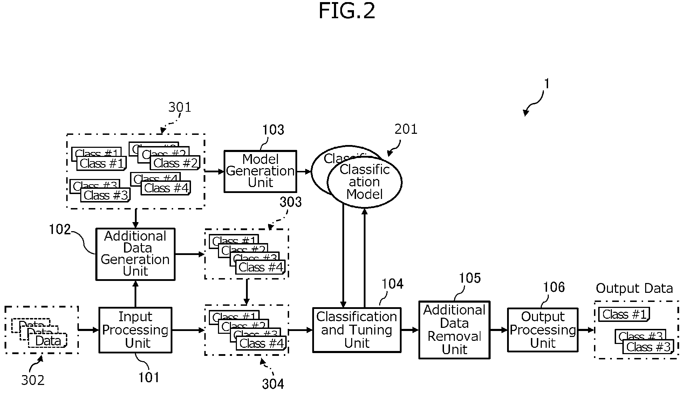

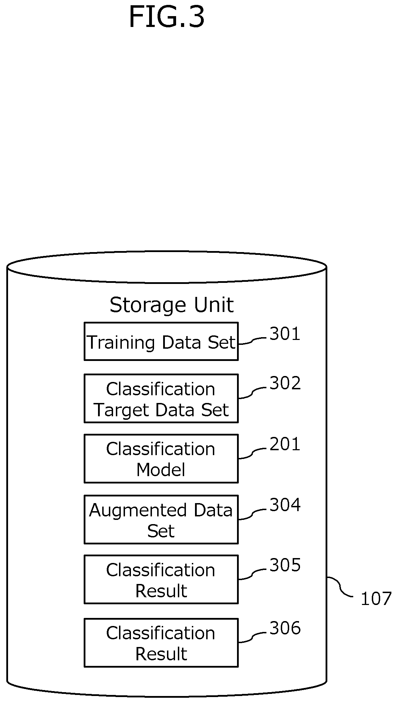

FIG. 2 is a diagram schematically illustrating the configuration of the classification processing apparatus 1 as related art. Additionally, FIG. 3 is a diagram illustrating the information stored in a storage unit 107 in the classification processing apparatus 1.

The classification processing apparatus 1 exemplified in FIG. 2 has the functions of an input processing unit 101, an additional data generation unit 102, a model generation unit 103, a classification and tuning unit 104, an additional data removal unit 105, and an output processing unit 106.

The classification processing apparatus 1 operates in a training phase (training mode) and an operation phase (operation mode). During the operation phase, the classification processing apparatus 1 classifies classification target data pieces into one of the classes in a known number. The classification target data pieces may be images, audio, or text.

A training data set 301, a classification target data set 302, classification models 201, an augmented data set 304, and classification results 305 and 306 are stored in the storage unit 107.

The training data set 301 includes a plurality of training data pieces. Each training data piece has a ground truth label indicating its correct class attached thereto. The classification target data set 302 includes a plurality of classification target data pieces. Each classification target data piece has no ground truth label attached thereto. The data pieces included in the classification target data set 302 may be referred to as input data pieces.

The input processing unit 101 processes the data pieces that is input (input data pieces). For example, the input processing unit 101 checks whether data pieces that are input are classification target data pieces. The input processing unit 101 stores the input classification target data pieces in the storage unit 107 as part of the classification target data set 302.

During the training phase, the model generation unit 103 performs a first machine learning process using the training data set 301 to generate a classification model 201. The classification model 201 is one example of a machine learning model that classifies input data pieces into one of a plurality of classes.

The model generation unit 103 stores the generated classification model 201 in the storage unit 107. The generated classification model 201 is a trained machine learning model.

As the machine learning model, neural networks, logistic regression, support vector machines, decision trees, random forests, and the like are used. The machine learning model may also be a DL model.

During the operation phase, the additional data generation unit 102 may generate additional data pieces 303 by selecting, for each class, one or more training data pieces from training data pieces included in the training data set 301, and removing the ground truth labels from the selected training data pieces, for example. As a result, additional data pieces 303 belonging to the respective plurality of classes are generated. The additional data generation unit 102 then generates an augmented data set 304 by adding the additional data pieces 303 to the classification target data pieces (input data pieces) included in the classification target data set 302. The augmented data set 304 includes both the input data pieces and the additional data pieces 303.

The input data pieces included in the augmented data set 304 are examples of first input data pieces that do not have ground truth labels. The additional data pieces 303 included in the augmented data set 304 are examples of second input data pieces that have known ground truth labels (classes). The additional data generation unit 102 stores the generated augmented data set 304 in the storage unit 107.

Since the selection is made from training data pieces of which classes are known, the desired number of training data pieces can be selected for each class, enabling efficient generation of additional data pieces 303 belonging to the respective plurality of classes. The additional data generation unit 102 may select the additional data pieces 303 from data other than the training data pieces, the classes of which are known.

The additional data generation unit 102 may generate the number of additional data pieces 303 corresponding to the number of input data pieces (input data piece count), for example. For example, the additional data generation unit 102 may generate additional data pieces 303 for the respective classes at a given ratio R relative to the input data piece count. For example, if the input data piece count is 100 and the ratio R is 20%, the additional data generation unit 102 generates 20 additional data pieces 303 for each class. The ratio R used to determine the number of additional data pieces 303 generated for each class may be referred to as the additional data piece ratio R. The additional data piece ratio R is preferably a ratio so that the impact on degradation of the accuracy for both good and defective items is minimized.

The classification and tuning unit 104 updates the classification model 201 by performing a second machine learning process using the augmented data set 304. As the second machine learning process, for example, online machine learning using the HDL technique may be employed. The second machine learning process may be the online machine learning process disclosed in Patent Document 1.

The classification and tuning unit 104 inputs both the input data pieces (first input data pieces) and the additional data pieces 303 (second input data pieces) into the classification model 201.

The classification and tuning unit 104 updates the classification model 201 by performing machine learning using the input data pieces (first input data pieces) and the additional data pieces 303 (second input data pieces).

The classification and tuning unit 104 generates a classification result 305 by classifying each classification target data piece and each additional data piece 303 included in the augmented data set 304 into one of the classes using the updated classification model 201, and stores the classification result 305 in the storage unit 107. The classification result 305 includes the classification result of each classification target data piece and the classification result of each additional data piece 303.

Even when the classification target data pieces have data drift, it is possible to accurately classify the data pieces by updating the classification model 201 using the augmented data set 304 and classifying each data piece using the updated classification model 201.

The additional data removal unit 105 generates a classification result 306 by removing the classification result of each additional data piece 303 from the classification result 305, leaving only the classification results of the classification target data pieces, and stores the classification result 306 in the storage unit 107. The classification result 306 includes only the classification results of the classification target data pieces. The classification result 306 is one example of a first output result for the input data pieces (first input data pieces) out of the data pieces output from the classification model 201.

The output processing unit 106 outputs the classification result 306 as the classification result by the classification model 201. The output processing unit 106 may output a determination result as to whether the classification model 201 has degraded.

According to the classification processing apparatus 1 of the related art illustrated in FIG. **1****,** when the classification target data pieces included in the classification target data set 302 are classified, a part of the training data pieces of which classes are known is added to the augmented data set 304 as additional data pieces 303, for the respective classes. Therefore, even if the classification target data set 302 is imbalanced, the class ratio of the augmented data set 304 is adjusted to approach the class ratio in the training data set 301.

By inputting the augmented data set 304 having a class ratio closer to that of the training data set 301, into the classification model 201, and classifying each data piece, the likelihood of each data piece being classified into the correct class is increased. As a result, even if the class ratio in the classification target data set 302 significantly deviates from that of the training data set 301, the classification target data pieces can still be classified accurately.

In the classification processing apparatus 1 of the related art illustrated in FIG. **1****,** the augmented data set 304 is generated by adding additional data pieces 303 to the imbalanced classification target data set 302. However, if the ratio to add data pieces having known ground truths as the additional data pieces 303 is increased, the characteristics of the data pieces in the input classification target data set 302 may become diluted by the additional data pieces 303, potentially leading to a decrease in classification accuracy for the classification target data set 302.

Conversely, if the ratio to add data pieces having known ground truths as the additional data pieces 303 is reduced, the classification and tuning unit 104 classifies the imbalanced classification target data set 302 and updates the classification model 201 based on this classification target data set 302, which may result in degradation of the classification model 201.

Even if the classification model 201 has actually degraded, since the classification target data set 302 typically does not have ground truth labels attached to it, it is generally impossible to verify in real time during the operation whether or not the classification accuracy by the classification model 201 has decreased.

In light of this issue, a classification processing apparatus 1a as one example embodiment of the present embodiment is directed to correctly restoring the accuracy without causing degradation of the classification model 201 even if imbalanced input data or drifted data is input during an operation, thereby enabling accurate classification of a plurality of classification target data pieces.

### (B) Description of Embodiment

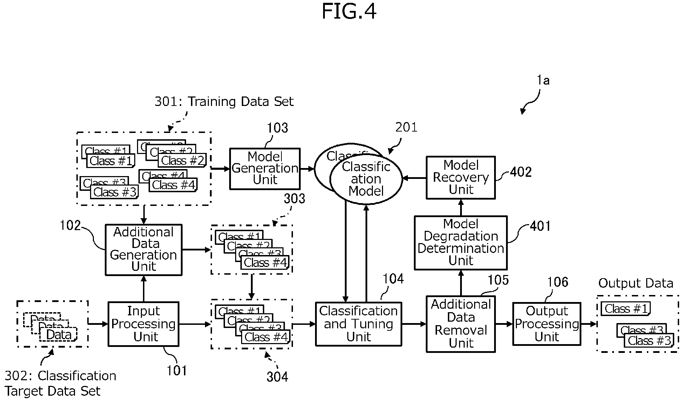

FIG. 4 is a schematic diagram illustrating the configuration of a classification processing apparatus 1a according to one embodiment.

The classification processing apparatus 1a illustrated in FIG. 4 includes a model degradation determination unit 401 and a model recovery unit 402 in the classification processing apparatus 1 of the related art (see FIG. 2), and the other elements are configured similarly to the corresponding elements in the classification processing apparatus 1 of the related art. In the drawings, the same reference symbols as those previously described denote the like elements, and the descriptions thereof are omitted.

The model degradation determination unit 401 determines whether the classification model 201 has degraded or not based on a classification result of each additional data piece 303 removed from the classification result 305 by the additional data removal unit 105 and the ground truth label thereof.

The model degradation determination unit 401 determines whether the classification model 201 has degraded or not based on the output results for additional data pieces 303 (second input data pieces) out of the output results (the classification result 305) output from the classification model 201 and the ground truth labels (classes) thereof.

For example, the model degradation determination unit 401 may calculate the classification accuracy of the additional data pieces 303 and determine that the classification model 201 has degraded if this classification accuracy is smaller than a threshold. The classification accuracy may be, for example, the correct answer rate.

It should be noted that the method used by the model degradation determination unit 401 to determine whether the classification model 201 has degraded or not is not limited to this approach and may be embodied in various modifications. For example, the model degradation determination unit 401 may compare the calculated classification accuracy of the additional data pieces 303 with the previously calculated classification accuracy and determine that the classification model 201 has degraded if the classification accuracy has decreased from the previously calculated classification accuracy by a given threshold or more.

The model recovery unit 402 performs a recovery process for the classification model 201 when the model degradation determination unit 401 determines that the classification model 201 has degraded.

For example, the recovery process may recover the classification model 201 by reverting the classification model 201 to the state before it was determined to have degraded. In other words, the model recovery unit 402 may restore the classification model 201 to the (pre-update) classification model 201 before being updated by the classification and tuning unit 104.

Therefore, in the classification processing apparatus 1a, it is preferable that each time the classification and tuning unit 104 updates the classification model 201, the pre-update classification model 201 is stored in the storage unit 107 or the like.

It should be noted that the method for recovering the classification model 201 by the model recovery unit 402 is not limited to this approach. For example, the number of additional data pieces 303 in the augmented data set 304 may be increased, and the classification model 201 may be retrained using this augmented data set 304. For example, if the previous additional data piece ratio R was 5%, the additional data piece ratio R may be increased to 20%.

The degraded classification model 201 can be recovered by increasing the number of additional data pieces 303 in the augmented data set 304 to make the data set less imbalanced, and re-training the classification model 201 using this less-imbalanced augmented data set 304. The method of recovering the classification model 201 by increasing the number of additional data pieces 303 is particularly effective when the same input data is processed again.

### (C) Operations

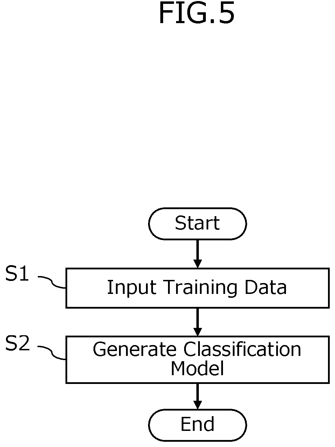

An example of the training process in the classification processing apparatus 1a configured as described above will be described with reference to the flowchart illustrated in FIG. 5 (Steps S1 to S2). This process is performed during the training phase.

The model generation unit 103 inputs a plurality of training data pieces included in the training data set 301 into a machine learning model before being trained (Step S1) and generates a classification model 201 by performing first machine learning (Step S2).

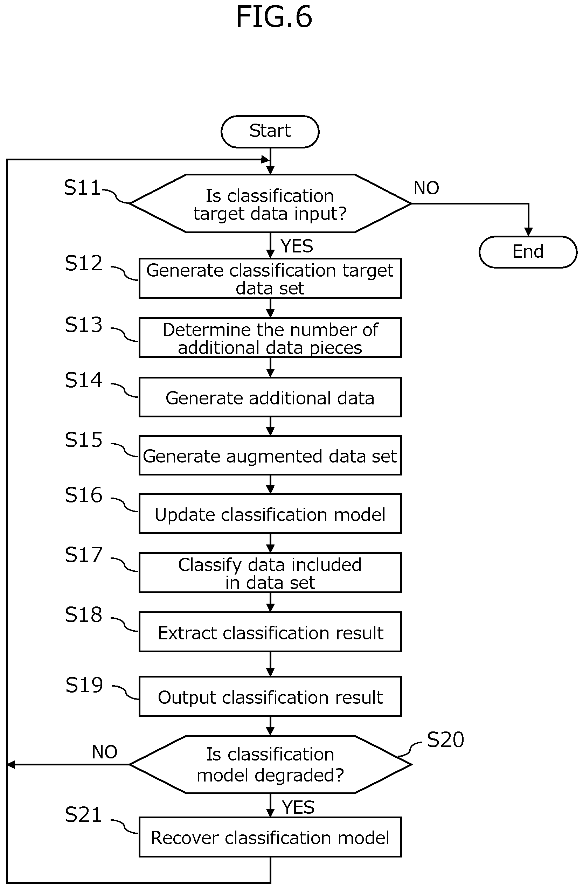

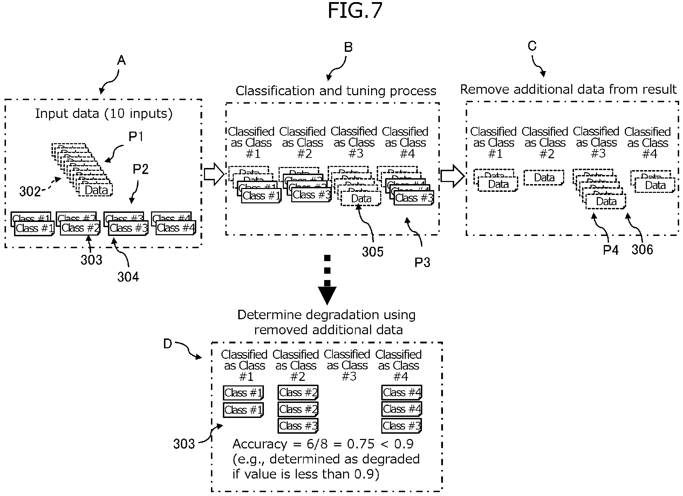

Next, an example of the classification process in the classification processing apparatus 1a according to one embodiment will be described with reference to the flowchart illustrated in FIG. 6 (Steps S11 to S21), by also referring to FIG. 7. FIG. 7 is a diagram illustrating data pieces processed in this classification processing apparatus 1a. The following processing is executed during the operation phase.

FIG. 7 illustrates an example where a classification model 201 for four-class classification is used, and the classification model 201 classifies data pieces into one of a class #1 to a class #4. In FIG. 7, the symbol A is used for describing the processes by the input processing unit 101 and the additional data generation unit 102, and the symbol B is used for describing the process by the classification and tuning unit 104. Additionally, the symbol C is used for describing the process by the additional data removal unit 105, and the symbol D is used for describing the process by the model degradation determination unit 401.

The input processing unit 101 checks whether or not a plurality of data pieces to be classified are input (Step S11).

If a plurality of data pieces to be classified are input (see YES route of Step S11), the input processing unit 101 generates a classification target data set 302 including these data pieces and stores it in the storage unit 107 (Step S12). In the example illustrated in FIG. 7, the input data pieces are drawn in dashed lines, and 10 input data pieces are illustrated (see the symbol P1). These plurality of input data pieces correspond to the classification target data set 302.

The additional data generation unit 102 determines the number M of the additional data pieces 303 belonging to each class, based on the input data piece count and the ratio R (Step S13). Specifically, the additional data generation unit 102 determines the number M of additional data pieces to the input data piece count so that M satisfies the ratio R. In the example illustrated in FIG. 7, since the input data piece count is 10 and the ratio R is 20%, the additional data generation unit 102 determines that the number M of additional data pieces belonging to each class is two.

The additional data generation unit 102 generates additional data pieces 303 by selecting M training data pieces for each class from training data pieces included in the training data set 301, and removing the ground truth labels from the selected training data pieces (Step S14).

In the example denoted by the symbol A in FIG. 7, the additional data generation unit 102 adds data pieces having ground truths for each class at a rate of 20% of the input data piece count (10). In other words, the additional data generation unit 102 generates two (M = 2) additional data pieces 303 having known ground truths for each class (see the symbol P2). In FIG. 7, the additional data pieces 303 are drawn in solid lines.

The additional data generation unit 102 generates an augmented data set 304 by adding the additional data pieces 303 to the classification target data pieces included in the classification target data set 302 (Step S15). The example denoted by the symbol A in FIG. 7 illustrates the augmented data set 304 having 18 data pieces assembled by adding 8 additional data pieces 303 to the 10 input data pieces.

At this time, the additional data generation unit 102 gives identification information to each data piece in the augmented data set 304 to distinguish the classification target data pieces from the additional data pieces 303.

The classification and tuning unit 104 updates the classification model 201 by performing second machine learning using the augmented data set 304 (Step S16). The classification and tuning unit 104 then generates a classification result 305 by classifying each data piece included in the augmented data set 304 into one of the classes using the updated classification model 201 (Step S17).

In the example denoted by the symbol B in FIG. 7, two input data pieces and two additional data pieces 303 are classified into the class #1, one input data piece and three additional data pieces 303 are classified into the class #2, five input data pieces are classified into the class #3, and two input data pieces and three additional data pieces 303 are classified into the class #4 (see the symbol P3).

Subsequently, the additional data removal unit 105 generates a classification result 306 by removing the classification result of each additional data piece 303 from the classification result 305, leaving only the classification results of the classification target data pieces (Step S18; see the symbol P4). The output unit 416 outputs the classification result 306 (Step S19).

The model degradation determination unit 401 determines whether the classification model 201 has degraded or not based on the classification result of each additional data piece 303 removed from the classification result 305 by the additional data removal unit 105 and the ground truth label thereof (Step S20).

In the example denoted by the symbol D in FIG. 7, two additional data pieces 303 that should have been classified into the class #3 have been misclassified into the class #2 and the class #4. Thus, since six out of eight additional data pieces 303 have been correctly classified, the model degradation determination unit 401 calculates the classification accuracy (correct answer rate) by the classification model 201 as 0.75 (= 6/8). The model degradation determination unit 401 compares this calculated classification accuracy with a given threshold (e.g., 0.9) and determines that the classification model 201 has degraded if the classification accuracy is less than the threshold.

If the model degradation determination unit 401 determines that the classification model 201 has degraded (see YES route of Step S20), the model recovery unit 402 recovers the classification model 201 (Step S21). For example, the model recovery unit 402 retrieves the (previous version of) classification model 201 before the update that has not been determined as being degraded, from the storage unit 107 and replaces the degraded model with the previous version.

Subsequently, the process returns to Step S11, and the classification processing apparatus 1a repeats the process from Step S11.

On the other hand, if the model degradation determination unit 401 determines that the classification model 201 has not degraded (see NO route of Step S20), the process returns to Step S11, and the classification processing apparatus 1a repeats the processing from Step S11.

If the input of classification target data pieces is stopped (see NO route of Step S11), the classification processing apparatus 1a ends the process.

The classification processing apparatus 1a configured as described above may be applied to, for example, a defective item detection system employing image inspection Artificial Intelligence (AI).

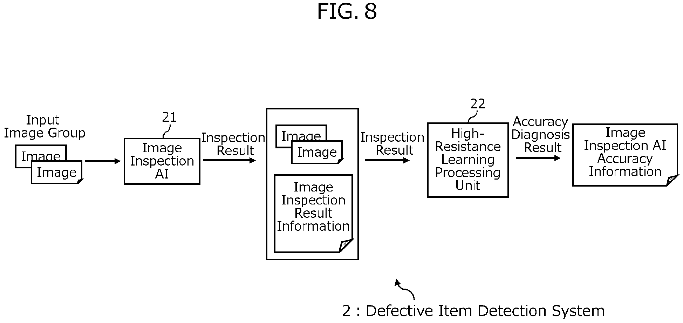

FIG. 8 is a diagram exemplifying the configuration of a defective item detection system 2.

The defective item detection system 2 exemplified in FIG. 8 includes an image inspection AI 21 and a high-resistance learning processing unit 22.

The image inspection AI 21 receives a plurality of images of inspection targets (e.g., bolts) (input image group). In other words, in the defective item detection system 2, the input data pieces are the inspection target data pieces.

The image inspection AI 21 inspects each input image and outputs inspection result information for each image. The inspection result information may include a determination result indicating whether the inspection target is either a good item or a defective item. The image inspection AI 21 inputs an inspection result that associates the image with the inspection result information into the high-resistance learning processing unit 22.

The high-resistance learning processing unit 22 diagnoses whether or not the inspection results of the image inspection AI 21 are correct. The high-resistance learning processing unit 22 outputs accuracy information (accuracy diagnosis result) as the diagnosis result. The accuracy information output by the high-resistance learning processing unit 22 may be referred to as image inspection AI accuracy information.

This high-resistance learning processing unit 22 includes the function of the classification processing apparatus 1a described above.

For example, the high-resistance learning processing unit 22 provides the functions of the model generation unit 103 to perform machine learning (generation) of a classification model 201 based on image data pieces using a plurality of training images. In this defective item detection system 2, the classification model 201 performs a two-class classification to classify input image data pieces into either a good item or a defective item. The plurality of image data pieces correspond to training data set 301.

After the generation (machine learning) of the classification model 201, the operation of the defective item detection system 2 is started, where the high-resistance learning processing unit 22 provides the functions of the classification processing apparatus 1a to classify each of the plurality of input images into either a good item or a defective item. These plurality of input image data pieces correspond to the classification target data set 302.

The high-resistance learning processing unit 22 may determine whether the inspection results by the image inspection AI 21 are correct or not by comparing the inspection results by the image inspection AI 21 with the classification results by the classification model 201.

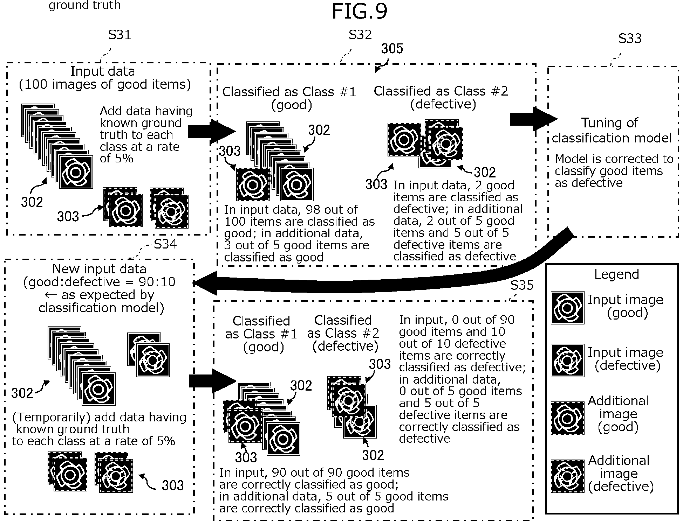

An example of the process performed by the classification processing apparatus 1a in the defective item detection system 2 employing the image inspection AI 21 will be described with reference to the flowchart illustrated in FIG. 9 (Steps S31 to S35).

The classification model 201 is trained (machine-learned) in advance during the training phase assuming that the ratio of good items to defective items is normally 90:10. The flowchart illustrated in FIG. 9 represents the process in the operation phase.

In Step S31, imbalanced input data pieces are input. In the example illustrated in FIG. 9, 100 image data pieces (images) of good items are input and zero image data pieces (images) of defective items are input, as input data pieces. Hereinafter, image data pieces of good items may be referred to as good images, while image data pieces of defective items may be referred to as defective images.

The additional data generation unit 102 generates additional data pieces 303 according to the additional data piece ratio R, while the ground truths of the input data pieces remain unknown. The additional data piece ratio R is a ratio so that the impact on degradation of the accuracy for both good and defective items is minimized. In this example, the additional data piece ratio R is 5%. The additional data generation unit 102 generates five additional data pieces 303 for each class. In other words, the additional data generation unit 102 generates five good images and five defective images.

Since the augmented data set 304 includes a total of 110 image data, including the input data pieces and the additional data pieces 303, it contains 105 good images and 5 defective images, while the actual ground truths remain unknown.

In Step S32, the classification and tuning unit 104 generates a classification result 305 by classifying each classification target data piece and each additional data piece 303 included in the augmented data set 304 into one of the classes using the updated classification model 201.

Due to the characteristic of the DL model that classifies data pieces according to the ratio during the training, the classification model 201 classifies the 100 input data pieces (input images) into 98 good items and 2 defective items.

Furthermore, for the additional data pieces 303, the classification model 201 classifies only three as good, and classifies two as defective, out of five actual good items. For five actual defective items, the classification model 201 classifies all (5) as defective.

In other words, the classification model 201 classifies 110 data pieces in the augmented data set 304 into 101 good items and 9 defective items.

In Step S33, the classification and tuning unit 104 performs tuning of the classification model 201. In this tuning, since the additional data pieces 303 are insufficient, the classification model 201 is adjusted to increase the likelihood of classifying inspection targets as defective compared to the conventional classification model.

Since eight out of the ten additional data pieces 303 having ground truth labels are correctly classified, the classification accuracy is 0.8. Here, if the threshold is set to 0.9, the model degradation determination unit 401 determines that the classification model 201 has degraded because the classification accuracy is less than the threshold. If the model degradation determination unit 401 determines that the classification model 201 has degraded, the model recovery unit 402 performs a recovery process of the classification model 201.

In Step S34, new imbalanced input data pieces are input. It is assumed that 90 image data pieces of good items and 10 image data pieces of defective items are input as input data pieces, in the example illustrated in FIG. 9.

The additional data generation unit 102 generates additional data pieces 303 according to the additional data piece ratio R of 5%, while the ground truths of the input data remain unknown. In other words, five images of good items and five images of defective items are generated. In this example, it is assumed that, since the same input data pieces as in Step S31 are not reprocessed, the additional data piece ratio R remains unchanged.

Since the augmented data set 304 includes a total of 110 image data, including input data pieces and the additional data pieces 303, it contains 95 good images and 15 defective images, while the actual ground truths remain unknown.

In Step S35, the classification and tuning unit 104 generates a classification result 305 by classifying each classification target data piece and each additional data pieces 303 included in the augmented data set 304 into one of the classes using the recovered classification model 201.

Here, since the classification model 201 has been recovered, for the input data with the ratio initially assumed by the classification model 201 (the ratio during the training, which is the ratio of good items: defective items = 90:10 in this case), the classification model 201 correctly classifies the 100 input data pieces (input images) into 90 good items and 10 defective items. In other words, the classification model 201 classifies all 90 good items included in the 100 input data pieces as good and all 10 defective items included in the 100 input data pieces as defective.

The classification model 201 also correctly classifies the additional data pieces 303. In other words, for the additional data pieces 303, the classification model 201 correctly classifies all five good items as good and all five defective items as defective.

In contrast, when the classification processing apparatus 1 of the related art illustrated in FIG. 2 is applied to the defective item detection system employing an image inspection AI in place of the classification processing apparatus 1a, even when the classification model 201 has degraded, the classification model 201 will not recovered by the model recovery unit 402.

Therefore, when the same process as that illustrated in FIG. 9 is performed, Steps S31 to S32 proceed in the same manner, but the classification accuracy in Step S35 is lower compared to that in the classification processing apparatus 1a.

Specifically, for the input data with the ratio initially assumed by the classification model 201 (the training ratio, which is the ratio of good items: defective items = 90:10 in this case), among 100 input data pieces (input images), the classification model 201 classifies 89 out of the 90 actual good items as good and classifies 1 as defective, for example. For 10 actual defective items, all 10 are classified as defective.

For the additional data pieces 303, out of five actual good items, four are classified as good, while one is classified as defective. For five actual defective items, all (5) are classified as defective.

In this manner, in the classification processing apparatus 1 of the related art, the classification accuracy may be lower compared to that in the classification processing apparatus 1a.

### (D) Effects

As described above, in accordance with the classification processing apparatus 1a according to one embodiment, the model degradation determination unit 401 determines whether the classification model 201 has degraded or not based on the classification results of the additional data pieces 303 removed from the classification result 305 by the additional data removal unit 105 and the ground truth labels thereof. If the model degradation determination unit 401 determines that the classification model 201 has degraded, the model recovery unit 402 performs a recovery process for the classification model 201.

As a result, even when the classification model 201 has degraded during the operation phase due to reasons such as imbalanced input data or data drift, the model degradation determination unit 401 detects the degradation of the classification model 201, and the model recovery unit 402 recovers the classification model 201. Accordingly, the classification accuracy can be maintained high.

Since the model degradation determination unit 401 determines whether the classification model 201 has degraded or not based on the classification results of the additional data pieces 303 removed from the classification result 305 by the additional data removal unit 105 and the ground truth labels thereof, the decrease in classification accuracy can be detected in real time during the operation.

If the number of additional data pieces 303 generated by the additional data generation unit 102 is too large, the characteristics of the input data pieces may become diluted due to the additional data pieces 303, potentially causing the classification model 201 to degrade and lowering the classification accuracy for data pieces that is input during operation. On the other hand, if the number of the additional data pieces 303 is too small, the imbalanced input data pieces are used for classification and update of the model, potentially leading to degradation of the classification model 201. Even in these cases, if the model degradation determination unit 401 determines that the classification model 201 has degraded, the model recovery unit 402 performs a recovery process for the classification model 201, ensuring that the classification accuracy can be maintained high.

The additional data generation unit 102 generates an augmented data set 304 by generating additional data pieces 303 and adding them to the classification target data set 302, and the classification and tuning unit 104 classifies each classification target data pieces and each additional data pieces 303 included in the augmented data set 304 into one of the classes using the classification model 201. As a result, even if the classification target data set 302 is imbalanced, classification accuracy can be improved.

### (E) Miscellaneous

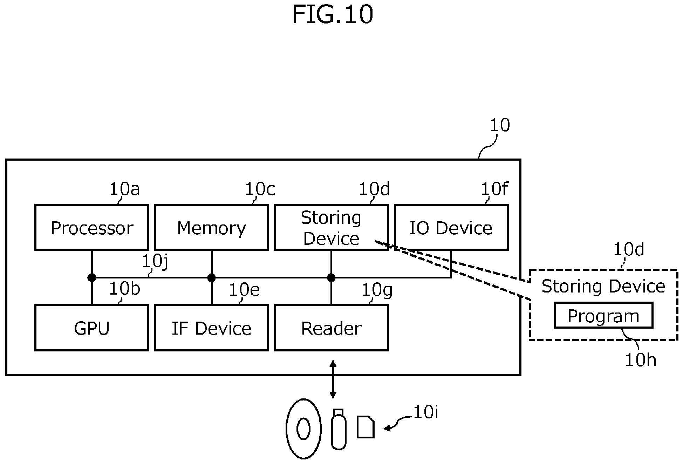

FIG. 10 is a block diagram illustrating an example of the hardware (HW) configuration of a computer 10 that embodies the functions of the classification processing apparatus 1a according to one embodiment and the classification processing apparatus 1 of the related art. When multiple computers are used as HW resources to embody the functions of the classification processing apparatus 1a, each computer may include the HW configuration illustrated in FIG. 10.

As illustrated in FIG. 10, the computer 10 may include, as an example, a processor 10a, a Graphics Processing Unit (GPU) 10b, a memory 10c, a storing device 10d, an Interface (IF) device 10e, an Input / Output (IO) device 10f, and a reader 10g, as the HW configuration.

The processor 10a is one example of a processing unit that performs various controls and computations and is as a controller that executes various processes. The processor 10a may be communicably connected to each block in the computer 10 via a bus 10j. The processor 10a may be a multiprocessor having a plurality of processors, may be a multicore processor having a plurality of processor cores, or may be configured to have a plurality of multicore processors.

Examples of the processor 10a include an integrated circuit (IC), such as a CPU, an MPU, an APU, a DSP, an ASIC, and an FPGA, for example. It should be noted that two or more combinations of these integrated circuits may be used as the processor 10a. CPU is an abbreviation for Central Processing Unit, and MPU is an abbreviation for Micro Processing Unit. APU is an abbreviation for Accelerated Processing Unit. DSP is an abbreviation for Digital Signal Processor, ASIC is an abbreviation for Application Specific IC, and FPGA is an abbreviation for Field-Programmable Gate Array.

The GPU 10b may be an accelerator such as a General-Purpose computing on Graphics Processing Unit (GPGPU). Additionally, the GPU 10b may control screen displays to an output device such as a monitor of the IO unit 10f. The GPU 10b may be configured as an accelerator that executes machine learning processes and inference (prediction) processes using a machine learning model. It can be said that the GPU 10b has higher processing performance than the CPU 10a in the machine learning processes and inference processes.

The memory 10c is one example of HW configured to store information, such as various data and programs. Examples of the memory 10c include either or both volatile memory, such as a Dynamic Random Access Memory (DRAM), and non-volatile memory, such as a Persistent Memory (PM), for example.

The storing device 10d is one example of HW configured to store information, such as various data and programs. Examples of the storing device 10d include various storing devices such as magnetic disk devices, e.g., a Hard Disk Drive (HDD), semiconductor drive devices, e.g., a Solid State Drive (SSD), and non-volatile memory. Examples of the non-volatile memory include a flash memory, a Storage Class Memory (SCM), and a Read Only Memory (ROM), for example. The above-described storage unit 107 may be embodied by, for example, the storing device 10d or may be embodied by a database (not illustrated), and may be embodied in various modifications.

The storing device 10d may store a program 10h (classification processing program) for embodying all or a part of the various functions of the computer 10.

For example, the processor 10a in the classification processing apparatus 1a can embody the functions of the above-described classification processing apparatus 1a by loading a program 10h stored in the storing device 10d into the memory 10c and executing it. The processor 10a is one example of a controller that embodies the functions of the input processing unit 101, the additional data generation unit 102, the model generation unit 103, the classification and tuning unit 104, the additional data removal unit 105, the output processing unit 106, the model degradation determination unit 401, and the model recovery unit 402.

The IF device 10e is one example of a communication IF configured to carry out processing, such as controls on connections and communications between this computer 10 and other computers. For example, the IF unit 10e may include an adapter compliant with a Local Area Network (LAN) standard such as the Ethernet^{®} or an optical communication standard such as the Fibre Channel (FC). This adapter may support either or both of wireless and wired communication methods.

It should be noted that the program 10h may be downloaded from a network to the computer 10 via the IF unit 10e and stored in the storing device 10d.

The IO device 10f may include either or both of an input device and an output device. Examples of the input device include a keyboard, a mouse, and a touch panel, for example. Examples of the output device include a monitor, a projector, and a printer, for example. The IO device 10f may also include a touch panel that integrates an input device and an output device. The output device may be connected to the GPU 10b. The IO unit 10f may be an input device or output device of another information processing apparatus connected to the computer 10 via Secure Shell (SSH), etc.

The reader 10g is one example of a reader that reads information, such as data and programs, recorded on a storage medium 10i. The reader 10g may include a connection terminal or device to which the storage medium 10i can be connected or inserted. Examples of the reader 10g include adapters that are compliant with standards, such as Universal Serial Bus (USB), drive devices that access recording disks, and card readers that access flash memory, such as SD cards, for example. It should be noted that the program 10h may be stored in the storage medium 10i, and the reader 10g may read the program 10h from the storage medium 10i and store the program 10h in the storing device 10d.

Examples of the storage medium 10i include, as an example, non-transitory computer-readable storage media such as magnetic/optical disks and flash memory. Examples of the magnetic/optical disks include, as an example, flexible disks, Compact Discs (CDs), Digital Versatile Discs (DVDs), Blu-ray disks, and Holographic Versatile Discs (HVDs). Examples of the flash memory include semiconductor memory devices such as USB memory and SD cards.

The HW configuration of the computer 10 described above is exemplary. Accordingly, HW components may be added or deleted (any block may be added or deleted, for example), divided, integrated in any combination, or buses may be added or deleted, in the computer 10 as appropriate.

Each element and process of the present embodiment can be selectively adopted or appropriately combined as necessary.

The disclosed technology is not limited to the above-described embodiment, and various modifications can be made without departing from the gist of the present embodiment.

For example, FIG. 8 illustrates an example where the classification processing apparatus 1a is applied to the defective item detection system 2 employing the image inspection AI 21, but this is not limiting and various modifications may be possible.

In the above-described embodiment, an example is described in which the additional data generation unit 102 generates the additional data pieces 303 by selecting one or more training data pieces for each class from training data pieces included in training data set 301 and removing the ground truth labels from the selected training data pieces, and the classification and tuning unit 104 updates the classification model 201 using both the input data pieces and the additional data pieces 303, during the operation phase. However, this is not limiting.

For example, the classification and tuning unit 104 may achieve a similar process to the generation of the additional data pieces 303 by selecting one or more training data pieces for each class from training data pieces included in training data set 301 and processing them while ignoring the ground truth labels of the selected training data pieces. In other words, the function of the additional data generation unit 102 may be incorporated into the classification and tuning unit 104, and various modifications may be possible.

Furthermore, those skilled in the art can practice and manufacture the present embodiment based on the above disclosure.

### [Description of Reference Sign]

- 1, 1a: Classification processing apparatus
- 2: Defective product detection system
- 10: Computer
- 10a: Processor
- 10b: GPU
- 10c: Memory
- 10d: Storing device
- 10e: IF device
- 10f: IO device
- 10g: Reader
- 10h: Program
- 10i: Recording medium
- 10j: Bus
- 21: Image inspection AI
- 22: High-resistance learning processing unit
- 101: Input processing unit
- 102: Additional data generation unit
- 103: Model generation unit
- 104: Classification and tuning unit
- 105: Additional data removal unit
- 106: Output processing unit
- 107: Storage unit
- 111: Input data pieces
- 112: Data set
- 511: Additional data pieces
- 201: Classification model
- 301: Training data set
- 302: Classification target data set
- 303: Additional data pieces
- 304: Augmented data set
- 305,: 306 Classification result
- 401: Model degradation determination unit
- 402: Model recovery unit

## Claims

1. A classification processing program **characterized in that** the program causes a computer to execute a process comprising:
inputting, into a machine learning model (201) that classifies input data pieces into one of a plurality of classes, a first input data piece that does not have a ground truth label and a second input data piece (303) that has a known ground truth label; and
determining whether the machine learning model (201) is degraded based on an output result (305) for the second input data piece (303) out of output results (305) output from the machine learning model (201), and the ground truth label.

2. The classification processing program according to claim **1, characterized in that** the classification processing program causes the computer to execute a process comprising
recovering the machine learning model (201) when it is determined that the machine learning model (201) is degraded.

3. The classification processing program according to claim 1 or 2, **characterized in that** the classification processing program causes the computer to execute a process comprising
outputting a first output result for the first input data piece out of data pieces output from the machine learning model (201), as a classification result of the machine learning model (201).

4. The classification processing program according to claim **1, characterized in that** the classification processing program causes the computer to execute a process comprising
outputting a determination result of whether the machine learning model (201) is degraded.

5. The classification processing program according to claim **1, characterized in that** the inputting comprises
inputting the second input data piece (303) prepared for each of the plurality of classes into the machine learning model (201).

6. The classification processing program according to claim 2, **characterized in that** the classification processing program causes the computer to execute a process comprising
updating the machine learning model (201) through machine learning using the first input data piece and the second input data piece (303),
the recovering comprising
reverting the updated machine learning model (201) to the machine learning model (201) before the update.

7. The classification processing program according to claim 2, **characterized in that** the recovering comprises
increasing a number of second input data pieces 303 having a known ground truth label.

8. The classification processing program according to claim 1, **characterized in that** the input data pieces are inspection target data pieces,
the plurality of classes comprise a good item and a defective item, and
the computer is provided in a defective item detection system (2) in which the machine learning model (201) classifies the inspection targets into either the good item or the defective item based on the inspection target data pieces.

9. A classification processing apparatus **characterized in that** the classification processing apparatus comprises a processor (10a) to execute a process comprising:
inputting, into a machine learning model (201) that classifies input data pieces into one of a plurality of classes, a first input data piece that does not have a ground truth label and a second input data piece (303) that has a known ground truth label; and
determining whether the machine learning model (201) is degraded based on an output result for the second input data piece (303) out of output result (305) output from the machine learning model (201), and the ground truth label.

10. A classification processing method **characterized in that** the classification processing method comprises:
inputting, into a machine learning model (201) that classifies input data pieces into one of a plurality of classes, a first input data piece that does not have a ground truth label and a second input data piece that has a known ground truth label; and
determining whether the machine learning model (201) is degraded based on an output result (305) for the second input data piece (303) out of output results (305) output from the machine learning model (201), and the ground truth label.
